# FASCICULE DE BREVET EUROPEEN

(11) **EP 2 570 253 B1**
(45) Date de publication et mention de la délivrance du brevet: **14.05.2014**
(21) Numéro de dépôt: 12184672.9
(22) Date de dépôt: 17.09.2012
(51) Int. Cl.: B29C 55/16, B29C 55/08, B29C 55/14

(54) **Dispositif pour étirer un film en matière synthétique dans le sens transversal et dans le sens longitudinal**
Vorrichtung zum Strecken einer Folie aus Kunststoff in Quer- sowie Längsrichtung
Apparatus for stretching a resin film in transverse and longitudinal direction

(30) Priorité: 19.09.2011 FR 1158286
(43) Date de publication de la demande: 20.03.2013
(73) Titulaire: Marchante Moreno, Innocente, 73370 Le Bourget Du Lac (FR)
(72) Inventeur: Marchante Moreno, Innocente, 73370 Le Bourget Du Lac (FR)
(74) Mandataire: Verriest, Philippe

(56) Documents cités:
- EP-A2- 0 291 775
- GB-A- 1 442 113

## Description

L'invention concerne un dispositif pour étirer un film en matière synthétique dans le sens transversal et dans le sens longitudinal. Un tel dispositif est décrit dans EP-A-0291775.

Lors de la fabrication d'un film en matière synthétique, le film, après sa formation, passe, successivement par une étape d'étirage dans le sens longitudinal et une étape d'étirage dans le sens transversal.

Des films de matière thermoplastiques bi-orientés sont obtenus à partir d'une feuille extrudée, après que la matière à l'état fondu ait été déposée sur un cylindre de refroidissement de façon à ralentir la cristallisation du film thermoplastique et permettre son étirage ultérieur.

La feuille de matière thermoplastique passe ensuite dans un système d'étirage longitudinal qui est constitué d'une série de cylindres qui tournent de plus en plus vite de façon à allonger la feuille thermoplastique dans le sens longitudinal. La feuille passe ensuite dans le système d'étirage transversal constitué de deux rails continus sur lesquels se déplacent des pinces qui maintiennent la feuille, chaque rail étant associé à une chaîne agencée pour entraîner les pinces correspondantes le long dudit rail. Les rails s'écartent à mesure qu'ils avancent dans un four chauffé à haute température, ce qui produit un étirage transversal.

Ce type d'étirage, dit séquentiel, convient parfaitement à de nombreuses matières thermoplastiques, et est largement utilisé dans l'industrie.

Avec le développement des matériaux thermoplastiques, l'augmentation des vitesses des machines de conversion et des nouvelles applications des thermoplastiques, il devient nécessaire de changer les propriétés du film de manière à augmenter la résistance mécanique de ce dernier dans le sens longitudinal. De telles propriétés du film peuvent permettre aussi d'augmenter la vitesse de la ligne de production du film, sans augmenter la vitesse des roues dentées qui entraînent chaque chaîne. De même, des modifications des propriétés du film dans le sens longitudinal peuvent aussi permettre de produire des films avec un haut retrait longitudinal.

Avec des machines à étirage séquentiel comme elles existent actuellement, il est impossible d'obtenir des films présentant des résistances mécaniques importantes dans le sens longitudinal ou de modifier ces dernières.

En effet, l'étirage transversal étant fait en dernier, on peut très bien agir sur les propriétés mécaniques du film dans le sens transversal, mais on ne peut plus agir dans le sens longitudinal alors que toute les machines de conversion, enroulage et déroulage ont besoin de films présentant des résistances mécaniques importantes dans le sens longitudinal, tels que les films adhésifs.

La présente invention vise à remédier à cet inconvénient.

Un but de l'invention est donc de fournir un dispositif, pour étirer un film en matière synthétique dans le sens transversal, de conception simple qui permette de réaliser, après l'étirage dans le sens transversal du film, un étirage du film dans le sens longitudinal pour modifier les propriétés du film dans le sens longitudinal.

A cet effet, l'invention concerne un dispositif pour étirer un film en matière synthétique dans le sens transversal et dans le sens longitudinal, comprenant :
- un four,
- une première et une seconde séries de pinces disposées de part et d'autre du film et agencées pour saisir le film au niveau de ses bords longitudinaux,
- deux rails agencés pour guider les pinces des deux séries dans le four, le premier et le second rails s'étendant selon une orientation générale parallèle à la direction longitudinale du film, le premier et le second rails divergeant l'un par rapport à l'autre dans une première zone du dispositif,
- deux chaînes sans fin agencées pour entraîner les pinces le long des deux rails chaque chaîne étant constituée de maillons articulés les uns sur les autres au moyen d'articulations, une articulation sur deux servant au montage d'une pince,
chaque rail comporte une portion de guidage qui s'étend, dans une première zone du rail, sensiblement parallèlement à la direction du rail et qui présente, dans une deuxième zone du rail située en aval de la première zone du rail, un décrochement en direction de la chaîne correspondante, le décrochement de chaque portion de guidage étant situé dans la première zone du dispositif, en ce que chaque chaîne comporte alternativement des maillons d'un premier type et des maillons d'un deuxième type, chaque maillon du premier type présentant des moyens de retenue faisant saillie en direction du rail correspondant, les moyens de retenue étant agencés pour être retenus par la portion de guidage correspondante de manière à appliquer une force de retenue sur le maillon correspondant, le décrochement de chaque portion de guidage étant agencé de manière à diminuer la force de retenue appliquée sur chaque maillon correspondant afin de déformer la chaîne correspondante pour augmenter le pas de celle-ci.

Les moyens de retenue en coopération avec la portion de guidage du rail correspondant permettent, par la force de retenue appliquée sur le maillon correspondant, de maintenir constant le pas de chaîne dans la première zone du rail et donc d'éviter tout étirage du film dans le sens longitudinal. Le décrochement de la portion de guidage dans la deuxième zone du rail permet, en diminuant la force de retenue sur le maillon, une déformation de la chaîne qui augmente le pas de chaîne et donc l'espacement le long du rail entre les pinces distribuées à ce niveau de la chaîne. Cet espacement entre pinces permet une augmentation des contraintes longitudinales appliquées au film et donc son étirage dans le sens longitudinal.

Ainsi, le dispositif d'étirage selon l'invention permet de réaliser, en aval de la première zone du dispositif et donc à l'issue de l'étirage transversal du film, un étirage du film dans le sens longitudinal pour modifier les propriétés du film dans le sens longitudinal.

La disposition du décrochement de la portion de guidage de chaque rail dans la première zone du dispositif (zone dans laquelle les rails divergent l'un par rapport à l'autre) permet d'obtenir, en aval du décrochement et jusqu'à l'extrémité aval de la première zone du dispositif, simultanément un étirage longitudinal et transversal du film.

Ces dispositions permettent de réaliser jusqu'à environ 25% de l'étirage longitudinal total du film dans le four où un tel étirage est plus aisé à réaliser que dans un système d'étirage placé en amont du four et comportant des rouleaux à différentiel de vitesse. Il en résulte une simplification du procédé de fabrication du film, mais également la possibilité d'augmenter encore la vitesse de la ligne de production du film.

Avantageusement, chaque maillon du premier type présente une forme générale en L, une première partie du maillon formant la première branche du L et une deuxième partie du maillon formant la deuxième branche du L, l'articulation pourvue d'une pince étant située au niveau de l'extrémité libre de la première partie et les moyens de retenue étant disposés au niveau de l'extrémité libre de la deuxième partie.

Une telle forme des maillons du premier type permet une application optimisée de la force de retenue sur le maillon correspondant, cette force de retenue étant appliquée par la coopération des moyens de retenue avec la portion de guidage sur le maillon correspondant.

De manière avantageuse, l'articulation dépourvue de pince de chaque maillon du premier type est disposée sur la deuxième partie du maillon à proximité de l'intersection entre la première et la deuxième parties.

Une telle disposition de l'articulation dépourvue de pince sur les maillons du premier type permet à chaque chaîne de présenter un alignement des maillons dans la première zone du rail correspondant.

Selon une possibilité de l'invention, les moyens de retenue de chaque maillon du premier type comprennent au moins un galet agencé pour rouler le long de la portion de guidage correspondante.

Un tel galet permet de limiter les frottements sur la portion de guidage, limitant ainsi l'usure que pourrait créer de tels frottements.

Selon une autre possibilité de l'invention, les moyens de retenue de chaque maillon du premier type comprennent au moins un patin agencé pour glisser le long de la portion de guidage correspondante.

Un tel patin permet de limiter les frottements sur la portion de guidage, limitant ainsi l'usure que pourrait créer de tels frottements.

De manière avantageuse, l'articulation dépourvue de pince de chaque maillon du premier type comprend des moyens d'appui pour appuyer sur la portion de guidage correspondante.

De tels moyens d'appui permettent, en venant en appui sur la portion de guidage, d'accompagner le maillon correspondant pendant la déformation de la chaîne.

Préférentiellement, les moyens d'appui comprennent au moins un galet.

Un tel galet permet de limiter les frottements sur la portion de guidage, limitant ainsi l'usure que pourrait créer de tels frottements.

Avantageusement, chaque portion de guidage s'étend jusqu'à l'extrémité aval du rail correspondant.

Une telle continuité de chaque portion de guidage jusqu'à l'extrémité aval du rail correspondant permet une application des contraintes d'étirage longitudinal sans leur relâchement, permettant ainsi une stabilisation des caractéristiques du film liées à cet étirage.

De préférence, les rails s'étendent sensiblement parallèlement l'un par rapport à l'autre dans une deuxième zone du dispositif située en aval de la première zone du dispositif.

Selon une possibilité de l'invention, la deuxième zone du dispositif est dans le four.

Ainsi, le film est chauffé pendant la dernière partie de l'étape d'étirage dans le sens longitudinal, permettant d'augmenter la résistance du film à l'élongation et offrant ainsi la possibilité de manipuler le film à haute vitesse en autorisant des cadences de production plus importantes.

Selon une autre possibilité de l'invention, la deuxième zone du dispositif est en dehors du four et la deuxième zone du dispositif est une zone de refroidissement du film.

Ainsi, le film est refroidi pendant la dernière partie de l'étape d'étirage dans le sens longitudinal, permettant de modifier ses propriétés de relaxation longitudinale en présence d'une source.

Avantageusement, chaque pince comporte plusieurs galets pour permettre un guidage en translation de ladite pince sur le rail correspondant.

De tels galets permettent un guidage de la pince en limitant les frottements sur le rail correspondant tout en assurant un bon maintien de la pince sur ce même rail.

De façon avantageuse, la portion de guidage de chaque rail s'étend, dans la deuxième zone du rail et en aval du décrochement, sensiblement parallèlement à la direction du rail.

De toute façon l'invention sera bien comprise à l'aide de la description qui suit en référence au dessin schématique annexé représentant, à titre d'exemple non limitatif, une forme d'exécution de ce dispositif pour étirer un film en matière synthétique dans le sens transversal et dans le sens longitudinal.
La figure 1 est une vue d'ensemble d'une installation de production de film en matière synthétique ;
la figure 2 est une vue en coupe transversale de l'un des deux ensembles d'entrainement du film composé de pinces, d'un rail et d'une chaîne ;
la figure 3 est une vue en coupe longitudinale illustrant l'interaction entre une chaîne et le rail correspondant.

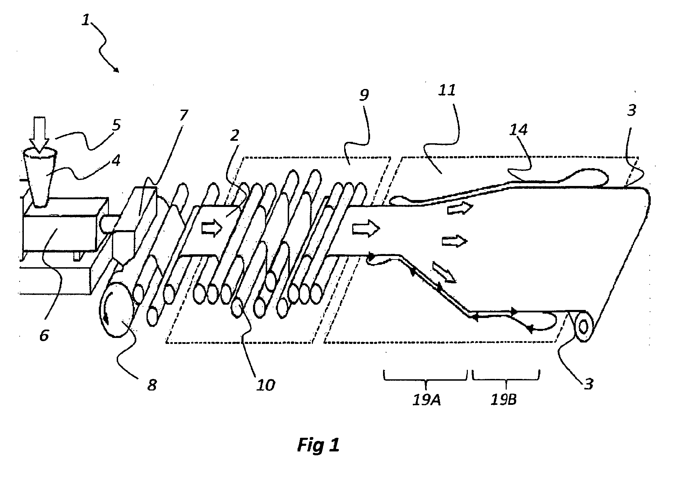

La figure 1 illustre une installation 1 de production d'un film 2 en matière synthétique. Le film 2 se présente sous une forme générale de ruban avec deux bords longitudinaux 3 sensiblement parallèles.

Une telle installation 1 comporte successivement les éléments suivants :
- un système d'alimentation 4 en matière synthétique 5,
- une extrudeuse 6 permettant une alimentation contrôlée en matière synthétique 5,
- un système de fusion 7 de la matière synthétique 5,
- un tambour de coulée 8 sur lequel est formé le film 2 par écoulement de la matière synthétique 5 fondue,
- un système 9 pour étirer le film 2 dans le sens longitudinal, le système 9 comportant des rouleaux 10 à différentiel de vitesse pour emporter et étirer le film 2,
- un dispositif 11 pour étirer le film 2 dans le sens transversal et dans le sens longitudinal.

Lors de la réalisation d'un film 2 avec une telle installation, le film 2 est déplacé longitudinalement dans l'installation 1 en passant successivement dans les différents éléments de l'installation.

Le dispositif 11 comporte :
- un four (non représenté) permettant de réguler la température du film 2 pendant son étirage dans le sens transversal et le sens longitudinal,
- une première et une seconde séries de pinces 12, les pinces de la première série étant agencées pour saisir le film 2 sur le premier bord longitudinal 3, et les pinces 12 de la seconde série étant agencées pour saisir le film 2 sur le second bord longitudinal 3,
- un premier rail 13 agencé pour guider en translation la première série de pinces 12 dans le four,
- un second rail 13 agencé pour guider en translation la seconde série de pinces 12 dans le four,
- une première chaîne sans fin 14 agencée pour entraîner les pinces 12 de la première série,
- une seconde chaîne sans fin 14 agencée pour entraîner les pinces 12 de la seconde série.

Chaque chaîne 14 comporte des maillons 15, 16 articulés les uns sur les autres au moyens d'articulations 17, 18.

Les rails 13 sont disposés au moins partiellement dans le four selon une orientation générale longitudinale de part et d'autre du film 2. Les rails 13, comme illustré sur la figure 1, divergent dans une première zone 19A du dispositif 11 selon la direction transversale au film 2, et s'étendent sensiblement parallèlement dans une deuxième zone 19A du dispositif 11.

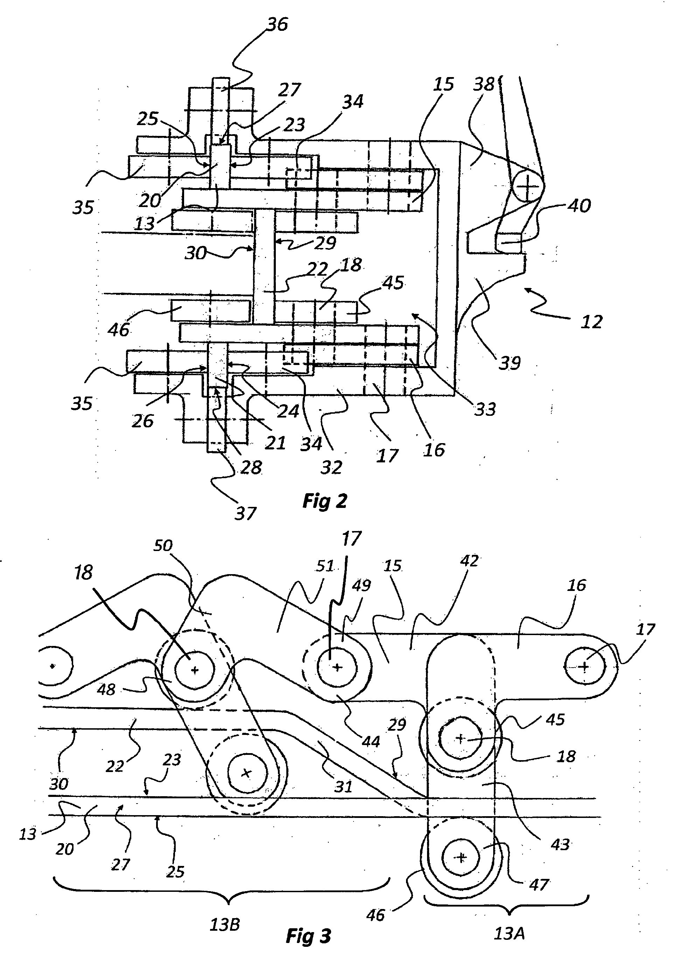

Chaque rail 13 comporte, comme illustré sur la figure 2, un bord supérieur 20 et un bord inférieur 21 pour guider les pinces 12 et une portion de guidage centrale 22 pour guider la chaîne 14.

Les bords supérieur 20 et inférieur 21 présentent chacun une section sensiblement rectangulaire. Les bords supérieur 20 et inférieur 21 présentent chacun, une première face 23, 24 en regard du bord longitudinal 3 du film 2, une deuxième face 25, 26 opposée à la première et un coté extérieur 27, 28 qui est opposé à la portion centrale 22.

La portion centrale 22 présente, comme illustré sur la figure 2, une section rectangulaire, présentant une face d'appui 29 en regard du bord longitudinal 3 du film 2 et une face de retenue 30 opposée à la face d'appui 29.

Comme illustré sur la figure 3, la portion de guidage 22 s'étend, dans une première zone 13A du rail 13, dans le même plan que les bords supérieur 20 et inférieur 21 du rail 13. La portion de guidage 22 présente, dans une deuxième zone 13B du rail 13 prolongeant la première zone 13A de ce dernier, un décrochement 31 en direction du film 2. En aval du décrochement 31, la portion de guidage 22 s'étend parallèlement et à distance des bords inférieur 20 et supérieur 21 du rail 13 jusqu'à l'extrémité aval du rail 13.

Le décrochement 31 est avantageusement situé dans la première zone 19A du dispositif 11, et de préférence à proximité de l'extrémité amont de la première zone 19A du dispositif 11, c'est-à-dire à proximité de la zone dans laquelle les rails 13 commencent à diverger.

Chaque pince 12 présente, comme illustré sur la figure 2, un corps de pince 32 creux de forme sensiblement parallélépipédique avec une cavité 33 en direction du rail 13 correspondant. La cavité 33 loge des galets 34, 35, 36, 37 montés en rotation sur le corps de pince 32. Les galets 34, 35, 36, 37 sont agencés sur chaque pince 12 de manière à permettre un maintien de la pince 12 sur le rail 13 correspondant.

Une première série de quatre galets 34 sont positionnés en appui sur la première face 23, 24 des bords 20, 21 du rail 13, deux galets 34 en appui sur le bord supérieur 20 et deux galets 34 en appui sur le bord inférieur 21. Une seconde série de quatre galets 35 sont positionnés en appui sur la seconde face 25, 26 des bords du rail 13, deux galets 35 en appui sur le bord supérieur 20 et deux galets 35 en appui sur le bord inférieur 21. Cet agencement de la première et de la seconde séries de galets 34, 35 est réalisé de manière à enserrer les bords 20, 21 du rail 13. Deux galets 36, 37 supérieur et inférieur permettent de compléter le maintien de la pince 12 sur le rail 13, en venant en appui sur les cotés extérieurs 27, 28 des bords 20, 21 du rail 13.

Chaque pince 12 présente également, en direction du film 2, deux ensembles de préhension 38 du film comportant chacun une embase 39 et un doigt d'appui 40 sur le film 2.

Chaque pince 12 est montée sur la chaîne 14 correspondante au niveau d'une articulation 17 de la chaîne 14. Les pinces 12 sont montées sur une articulation sur deux de la chaîne 14 correspondante, le montage étant articulé autour de cette même articulation.

Chaque chaîne comporte alternativement des maillons 15 d'un premier type et des maillons 16 d'un deuxième type. Chaque maillon 15, 16 présente pour sa liaison avec un maillon voisin, une articulation 17, pourvue d'une pince, et une articulation 18 dépourvue de pince.

Chaque maillon 15 du premier type présente une forme générale en L, une première partie 42 du maillon 15 formant la première branche du L et une deuxième 43 partie formant la deuxième branche du L. L'articulation 17, pourvue d'une pince, est située au niveau de l'extrémité libre 44 de la première partie 42. L'articulation 18 dépourvue de pince est disposée au niveau de la deuxième partie 43 du maillon 15 à proximité de l'intersection entre la première et la deuxième parties 42, 43. L'articulation 18 porte deux galets d'appui 45 agencés pour venir en appui sur la face d'appui 29 de la portion de guidage 22 du rail 13 correspondant à la chaîne 14.

La première partie 42 est, lorsque le maillon 15 du premier type est dans la première zone 13A du rail 13, sensiblement parallèle au rail 13, la deuxième partie 43 s'étendant perpendiculairement au rail 13.

Deux galets de retenue 46 sont montés en rotation au niveau de l'extrémité libre 47 de la deuxième partie 43 du maillon 15. Les deux galets de retenue 46 sont en appui sur la face de retenue 30 de la portion de guidage 22 du rail 13.

Chaque maillon 16 du deuxième type présente une forme générale de L, les articulations 17, 18 étant disposées aux extrémités libres 48, 49 de la première et la deuxième parties 50, 51 formant respectivement la première et la deuxième branches du L.

Lors de l'entrée du film 2 dans le dispositif 11, le film 2 est saisi par les pinces 12 au niveau de ses bords longitudinaux 3. Les pinces 12, entrainées par les chaînes 14, entraînent le film 2 le long des rails 13 dans le four.

Lors du déplacement du film dans la première zone 19A du dispositif, le film 2 ayant atteint la température adéquate, la divergence des rails 13 permet d'étirer le film 2 dans le sens transversal par une augmentation continue de l'espacement dans le sens transversal entre les pinces 12 de la première série et les pinces 12 de la seconde série.

Dans la première zone 13A de chaque rail 13, les galets de retenue 46 sont en appui sur la face de retenue 30 de la portion de guidage 22 du rail 13 correspondant. Cet appui permet d'appliquer une force de retenue sur l'articulation 18 sans pince des maillons 15 correspondants permettant de maintenir l'articulation 18 à proximité du rail 13 correspondant. Cette force de retenue permet, comme illustré sur la figure 3, un alignement des maillons 15, 16 du premier type et du second type, matérialisé par l'alignement de leurs parties 42, 51 respectives. Cet alignement conservé dans la première zone 13A de chaque rail 13 permet de maintenir un pas de chaîne 14 constant et donc un espacement entre pinces 12 constant le long du rail 13 correspondant. Le film 2 est donc déplacé, dans la première zone 13A de chaque rail 13, sans application de contrainte longitudinale.

Après le passage du film 2 dans la première zone 13A de chaque rail 13, le film 2, entraîné par les pinces 12, arrive dans la deuxième zone 13B de chaque rail 13 au niveau du décrochement 31 de la portion de guidage 22 de chaque rail 13. Les galets de retenue 46 roulent le long de la face de retenue 30 de la portion de guidage 22, en suivant le décrochement 31. Il en résulte un relâchement de la force de retenue appliquée à l'articulation 18 dépourvue de pince des maillons 15 correspondants. L'articulation 18 sans pince, accompagnée par l'appui des galets d'appui 45 sur la portion de guidage 22, est déplacée à distance des bords 20, 21 du rail 13 correspondant. Ce déplacement de l'articulation 18 dépourvue de pince déforme la chaîne 14 en permettant, comme illustré sur la figure 3, un alignement des articulations 17,18. Il résulte de cet alignement une augmentation du pas de chaîne et donc de l'espacement entre les pinces 12 le long du rail 13 correspondant.

Cet espacement entre les pinces 12 permet d'appliquer une contrainte longitudinale sur le film 2 et donc de l'étirer dans le sens longitudinal.

Ainsi, lors du déplacement du film dans la première zone 19A du dispositif, le film est dans un premier temps (jusqu'au décrochement 31 de chaque portion de guidage 22) étiré uniquement dans le sens transversal, et dans un second temps (à partir du décrochement 31 de chaque portion de guidage 22 et jusqu'à l'extrémité aval de la première zone 19A du dispositif), étiré simultanément dans le sens transversal et dans le sens longitudinal.

Lors du déplacement du film dans la deuxième zone 19B du dispositif, le film est étiré uniquement dans le sens longitudinal puisque les rails 13 s'étendent sensiblement parallèlement l'un par rapport à l'autre dans cette deuxième zone 19B du dispositif.

Selon une possibilité de l'invention, non illustrée, les galets d'appui 45 et les galets de retenue 46 peuvent être remplacés par respectivement un patin d'appui et un patin de retenue.

Selon une autre possibilité de l'invention, non illustrée, les pinces 12 peuvent être montées en coulissement sur les rails 13 correspondant par l'utilisation de deux coulisseaux en remplacement des galets 34, 35, 36, 37, chaque coulisseau venant enserrer un bord 20, 21 du rail 13.

Selon une autre possibilité de l'invention, la deuxième zone 19B du dispositif 11 peut être en dehors du four, dans une zone de refroidissement du film 2. Cette zone de refroidissement permet d'effectuer l'étirage du film 2 à une température proche de la température ambiante pour permettre une modification des propriétés de relaxation longitudinale du film 2 en présence d'une source de chaleur.

Comme il va de soi, l'invention ne se limite pas à la seule forme d'exécution de ce dispositif pour étirer un film en matière synthétique dans le sens transversal et dans le sens longitudinal, décrite ci-dessus à titre d'exemple, elle en embrasse au contraire toutes les variantes de réalisation.

## Revendications

1. Dispositif (11) pour étirer un film (2) en matière synthétique dans le sens transversal et dans le sens longitudinal, comprenant :
- un four,
- une première et une seconde séries de pinces (12) disposées de part et d'autre du film et agencées pour saisir le film (2) au niveau de ses deux bords longitudinaux (3),
- deux rails (13) agencés pour guider les pinces (12) des deux séries dans le four, le premier et le second rails (13) s'étendant selon une orientation générale parallèle à la direction longitudinale du film (2), le premier et le second rails (13) divergeant l'un par rapport à l'autre dans une première zone (19A) du dispositif (11),
- deux chaînes sans fin (14) agencées pour entraîner les pinces (12) des deux séries le long des deux rails (13), chaque chaîne (14) étant constituée de maillons articulés (15, 16) les uns sur les autres au moyen d'articulations (17, 18), une articulation (17) sur deux servant au montage d'une pince (12),
le dispositif (11) étant **caractérisé en ce que** chaque rail (13) comporte une portion de guidage (22) qui s'étend, dans une première zone (13A) du rail, sensiblement parallèlement à la direction du rail (13) et qui présente, dans une deuxième zone (13B) du rail située en aval de la première zone (13A) du rail, un décrochement (31) en direction de la chaîne correspondante, le décrochement (31) de chaque portion de guidage (22) étant situé dans la première zone (19A) du dispositif (11), **en ce que** chaque chaîne (14) comporte alternativement des maillons (15) d'un premier type et des maillons (16) d'un deuxième type, chaque maillon (15) du premier type présentant des moyens de retenue faisant saillie en direction du rail (13) correspondant, les moyens de retenue étant agencés pour être retenus par la portion de guidage (22) correspondante de manière à appliquer une force de retenue sur le maillon (15) correspondant, le décrochement (31) de chaque portion de guidage (22) étant agencé de manière à diminuer la force de retenue appliquée sur chaque maillon (15) correspondant afin de déformer la chaîne (14) correspondante pour augmenter le pas de celle-ci.

2. Dispositif (11) selon la revendication 1, **caractérisé en ce que** chaque maillon (15) du premier type présente une forme générale en L, une première partie (42) du maillon (15) formant la première branche du L et une deuxième partie (43) du maillon (15) formant la deuxième branche du L, l'articulation (17) pourvue d'une pince (12) étant située au niveau de l'extrémité libre (44) de la première partie (42) et les moyens de retenue étant disposés au niveau de l'extrémité libre (47) de la deuxième partie (43).

3. Dispositif selon la revendication 2, **caractérisé en ce que** l'articulation (18) dépourvue de pince de chaque maillon (15) du premier type est disposée au niveau de la deuxième partie (43) dudit maillon (15), à proximité de l'intersection entre la première et la deuxième parties (42, 43).

4. Dispositif (11) selon l'une des revendications 1 à 3, **caractérisé en ce que** les moyens de retenue de chaque maillon (15) du premier type comprennent au moins un galet (46) agencé pour rouler le long de la portion de guidage (22) correspondante.

5. Dispositif (11) selon l'une des revendications 1 à 3, **caractérisé en ce que** les moyens de retenue de chaque maillon (15) du premier type comprennent au moins un patin agencé pour glisser le long de la portion de guidage (22) correspondante.

6. Dispositif (11) selon l'une des revendications 1 à 5, **caractérisé en ce que** l'articulation (18) dépourvue de pince de chaque maillon (15) du premier type comprend des moyens d'appui pour appuyer sur la portion de guidage (22) correspondante.

7. Dispositif (11) selon la revendication 6, **caractérisé en ce que** les moyens d'appui comprennent au moins un galet (45).

8. Dispositif (11) selon l'une des revendications 1 à 7, **caractérisé en ce que** chaque portion de guidage (22) s'étend jusqu'à l'extrémité aval du rail (13) correspondant.

9. Dispositif (11) selon la revendication 1 à 8, **caractérisé en ce que** les rails (13) s'étendent sensiblement parallèlement l'un par rapport à l'autre dans une deuxième zone (19B) du dispositif située en aval de la première zone (19A) du dispositif.

10. Dispositif (11) selon la revendication 9, **caractérisé en ce que** la deuxième zone (19B) du dispositif est dans le four.

11. Dispositif (11) selon la revendication 9, **caractérisé en ce que** la deuxième zone (19B) du dispositif est en dehors du four, et **en ce que** la deuxième zone (19B) du dispositif est une zone de refroidissement du film.

12. Dispositif (11) selon l'une des revendications 1 à 11, **caractérisé en ce que** chaque pince (12) comporte plusieurs galets (34, 35, 36, 37) agencés pour permettre un guidage en translation de ladite pince (12) sur le rail (13) correspondant.

13. Dispositif (11) selon l'une des revendications 1 à 12, **caractérisé en ce que** la portion de guidage (22) de chaque rail s'étend, dans la deuxième zone (13B) du rail et en aval du décrochement (31), sensiblement parallèlement à la direction du rail (13).

## Patentansprüche

1. Vorrichtung (11) zum Dehnen einer Kunststofffolie (2) in Querrichtung und in Längsrichtung, umfassend:
- einen Ofen,
- eine erste und eine zweite Reihe von Klemmen (12), die auf beiden Seiten der Folie angeordnet und eingerichtet sind, um die Folie (2) an ihren beiden Längsrändern (3) zu ergreifen,
- zwei Schienen (13), die eingerichtet sind, um die Klemmen (12) der beiden Reihen in den Ofen zu führen, wobei sich die erste und die zweite Schiene (13) in einer allgemeinen Orientierung parallel zur Längsrichtung der Folie (2) erstrecken, wobei die erste und die zweite Schiene (13) in einem ersten Bereich (19A) der Vorrichtung (11) auseinander laufen,
- zwei Endlosketten (14), die eingerichtet sind, um die Klemmen (12) der beiden Reihen entlang den beiden Schienen (13) mitzunehmen, wobei jede Kette (14) aus Gliedern (15, 16) besteht, die anhand von Gelenken (17, 18) aneinander angelenkt sind, wobei jedes zweite Gelenk (17) zur Montage einer Klemme (12) dient,
wobei die Vorrichtung (11) **dadurch gekennzeichnet ist, dass** jede Schiene (13) einen Führungsabschnitt (22) umfasst, der sich in einem ersten Bereich (13A) der Schiene im Wesentlichen parallel zur Richtung der Schiene (13) erstreckt, und der in einem zweiten Bereich (13B) der Schiene, der sich stromabwärts von dem ersten Bereich (13A) der Schiene befindet, einen Rücksprung (31) in Richtung auf die entsprechende Kette aufweist, wobei sich der Rücksprung (31) jedes Führungsabschnitts (22) in dem ersten Bereich (19A) der Vorrichtung (11) befindet, dass jede Kette (14) alternativ Glieder (15) einer ersten Art und Glieder (16) einer zweiten Art umfasst, wobei jedes Glied (15) der ersten Art Haltemittel aufweist, die in Richtung auf die entsprechende Schiene (13) vorstehen, wobei die Haltemittel eingerichtet sind, um von dem entsprechenden Führungsabschnitt (22) festgehalten zu werden, um eine Haltekraft auf das entsprechende Glied (15) auszuüben, wobei der Rücksprung (31) jedes Führungsabschnitts (22) derart eingerichtet ist, dass er die Haltekraft verringert, die auf jedes entsprechende Glied (15) ausgeübt wird, um die entsprechende Kette (14) zu verformen, um ihren Kettengang zu vergrößern.

2. Vorrichtung (11) nach Anspruch 1, **dadurch gekennzeichnet, dass** jedes Glied (15) des ersten Typs eine allgemeine L-Form aufweist, wobei ein erster Teil (42) des Glieds (15) den ersten Schenkel des L bildet und ein zweiter Teil (43) des Glieds (15) den zweiten Schenkel des L bildet, wobei sich das Gelenk (17), das mit einer Klemme (12) versehen ist, an dem freien Ende (44) des ersten Teils (42) befindet und die Haltemittel an dem freien Ende (47) des zweiten Teils (43) angeordnet sind.

3. Vorrichtung nach Anspruch 2, **dadurch gekennzeichnet, dass** das Gelenk (18) ohne Klemme jedes Glieds (15) des ersten Typs an dem zweiten Teil (43) des Glieds (15) in der Nähe des Schnittpunktes zwischen dem ersten und dem zweiten Teil (42, 43) angeordnet ist.

4. Vorrichtung (11) nach einem der Ansprüche 1 bis 3, **dadurch gekennzeichnet, dass** die Haltemittel jedes Glieds (15) des ersten Typs mindestens eine Rolle (46) umfassen, die eingerichtet ist, um entlang dem entsprechenden Führungsabschnitt (22) zu rollen.

5. Vorrichtung (11) nach einem der Ansprüche 1 bis 3, **dadurch gekennzeichnet, dass** die Haltemittel jedes Glieds (15) des ersten Typs mindestens einen Gleitschuh umfassen, der eingerichtet ist, um entlang dem ersten entsprechenden Führungsabschnitt (22) zu gleiten.

6. Vorrichtung (11) nach einem der Ansprüche 1 bis 5, **dadurch gekennzeichnet, dass** das Gelenk (18) ohne Klemme jedes Glieds (15) des ersten Typs Druckmittel umfasst, um auf den entsprechenden Führungsabschnitt (22) zu drücken.

7. Vorrichtung (11) nach Anspruch 6, **dadurch gekennzeichnet, dass** die Druckmittel mindestens eine Rolle (45) umfassen.

8. Vorrichtung (11) nach einem der Ansprüche 1 bis 7, **dadurch gekennzeichnet, dass** sich jeder Führungsabschnitt (22) bis zum stromabwärtigen Ende der entsprechenden Schiene (13) erstreckt.

9. Vorrichtung (11) nach Anspruch 1 bis 8, **dadurch gekennzeichnet, dass** sich die Schienen (13) im Wesentlichen parallel zueinander in einem zweiten Bereich (19B) der Vorrichtung erstrecken, der sich stromabwärts von dem ersten Bereich (19A) der Vorrichtung befindet.

10. Vorrichtung (11) nach Anspruch 9, **dadurch gekennzeichnet, dass** sich der zweite Bereich (19B) der Vorrichtung in dem Ofen befindet.

11. Vorrichtung (11) nach Anspruch 9, **dadurch gekennzeichnet, dass** sich der zweite Bereich (19B) der Vorrichtung außerhalb des Ofens befindet, und dass der zweite Bereich (19B) der Vorrichtung ein Bereich zum Abkühlen der Folie ist.

12. Vorrichtung (11) nach einem der Ansprüche 1 bis 11, **dadurch gekennzeichnet, dass** jede Klemme (12) mehrere Rollen (34, 35, 36, 37) umfasst, die eingerichtet sind, um eine Translationsführung der Klemme (12) auf der entsprechenden Schiene (13) zu ermöglichen.

13. Vorrichtung (11) nach einem der Ansprüche 1 bis 12, **dadurch gekennzeichnet, dass** sich der Führungsabschnitt (22) jeder Schiene in dem zweiten Bereich (13B) der Schiene und stromabwärts von dem Rücksprung (31) im Wesentlichen parallel zur Richtung der Schiene (13) erstreckt.

## Claims

1. A device (11) for stretching a synthetic film (2) in the transverse direction and in the longitudinal direction, comprising:
- a furnace,
- a first and a second series of clamps (12) arranged on either side of the film and configured to grip the film (2) at its two longitudinal edges (3),
- two rails (13) arranged to guide the clamps (12) of the two series in the furnace, the first and second rails (13) extending in an orientation generally parallel to the longitudinal direction of the film (2), the first and second rails (13) diverging relative to each other in a first area (19A) of the device (11),
- two endless chains (14) arranged to drive the clamps (12) of the two series along the two rails (13), each chain (14) consisting of links articulated (15, 16) on each other by means of hinges (17,18), a hinge (17) out of two used to mount a clamp (12),
the device (11) being **characterized in that** each rail (13) comprises a guide portion (22) extending, in a first area (13A) of the rail, substantially parallel to the direction of the rail (13) and which has, in a second area (13B) of the rail located downstream from the first area (13A) of the rail, a recess (31) in the direction of the corresponding chain, the recess (31) of each guide portion (22) being located in the first area (19A) of the device (11), **in that** each chain (14) comprises alternately links (15) of a first type and links (16) of a second type, each link (15) of the first type having retaining means projecting towards the corresponding rail (13), the retaining means being arranged to be retained by the corresponding guide portion (22) to apply a retaining force on the corresponding link (15), the recess (31) of each guide portion (22) being arranged to reduce the retaining force applied to each corresponding link (15) to deform the corresponding chain (14) to increase the pitch thereof.

2. The device (11) according to Claim 1, **characterized in that** each link (15) of the first type is generally L-shaped, a first portion (42) of the link (15) forming the first limb of the L-shape and a second portion (43) of the link (15) forming the second limb of the L-shape, the hinge (17) fitted with a clamp (12) being located at the free end (44) of the first portion (42) and the retaining means being arranged at the free end (47) of the second portion (43).

3. The device according to Claim 2, **characterized in that** the hinge (18) devoid of a clamp of each link (15) of the first type, is arranged at the second portion (43) of said link (15), near the intersection between the first and second portions (42, 43).

4. The device (11) according to one of Claims 1 to 3, **characterized in that** the retaining means of each link (15) of the first type comprise at least one roller (46) arranged to roll along the corresponding guide portion (22).

5. The device (11) according to one of Claims 1 to 3, wherein the retaining means of each link (15) of the first type comprise at least one shoe adapted to slide along the corresponding guide portion (22).

6. The device (11) according to one of Claims 1 to 5, **characterized in that** the hinge (18) devoid of a clamp of each link (15) of the first type, comprises bearing means to bear on the corresponding guide portion (22).

7. The device (11) according to Claim 6, **characterized in that** that the bearing means comprises at least one roller (45).

8. The device (11) according to one of Claims 1 to 7, **characterized in that** each guide portion (22) extends to the downstream end of the corresponding rail (13).

9. The device (11) according to Claims 1 to 8, **characterized in that** the rails (13) extend substantially parallel relative to each other in a second area (19B) of the device located downstream from the first area (19A) of the device.

10. The device (11) according to Claim 9, **characterized in that** the second area (19B) of the device is in the furnace.

11. The device (11) according to Claim 9, **characterized in that** the second area (19B) of the device is outside the furnace, and **in that** the second area (19B) of the device is a film cooling area.

12. The device (11) according to one of Claims 1 to 11, **characterized in that** each clamp (12) comprises several rollers (34, 35, 36, 37) arranged to allow translational guidance of said clamp (12) on the corresponding rail (13).

13. The device (11) according to one of Claims 1 to 12, **characterized in that** the guide portion (22) of each rail extends, in the second area (13B) of the rail and downstream from the recess (31), substantially parallel to the direction of the rail (13).
